# EUROPEAN PATENT SPECIFICATION

(11) **EP 4 169 677 B1**
(45) Date of publication and mention of the grant of the patent: **21.01.2026**
(21) Application number: 21845893.3
(22) Date of filing: 07.07.2021
(51) Int. Cl.: B25J 13/08, B33Y 10/00, B33Y 30/00, B33Y 50/02, B23K 9/032, B23K 9/04, B23K 9/095, B23K 9/12, B23K 31/00, B25J 11/00

(54) **SYSTEM FOR MANUFACTURING LAMINATE MOLDED PRODUCT, METHOD FOR MANUFACTURING LAMINATE MOLDED PRODUCT, AND PROGRAM FOR MANUFACTURING LAMINATE MOLDED PRODUCT**
SYSTEM ZUR HERSTELLUNG EINES LAMINATFORMPRODUKTS, VERFAHREN ZUR HERSTELLUNG EINES LAMINATFORMPRODUKTS UND PROGRAMM ZUR HERSTELLUNG EINES LAMINATFORMPRODUKTS
SYSTÈME DE FABRICATION DE PRODUIT MOULÉ STRATIFIÉ, PROCÉDÉ DE FABRICATION DE PRODUIT MOULÉ STRATIFIÉ ET PROGRAMME DE FABRICATION DE PRODUIT MOULÉ STRATIFIÉ

(30) Priority: 20.07.2020 JP 2020123861
(43) Date of publication of application: 26.04.2023
(73) Proprietor: KABUSHIKI KAISHA KOBE SEIKO SHO (KOBE STEEL, LTD.), Hyogo 651-8585 (JP)
(72) Inventor: YOSHIKAWA Akinori, Hyogo 651-2271 (JP)
(74) Representative: Müller-Boré & Partner Patentanwälte PartG mbB
(86) International application number: PCT/JP2021/025685
(87) International publication number: WO 2022/019123

(56) References cited:
- EP-A1- 3 597 342
- JP-A- 2015 167 984
- JP-A- 2017 144 458
- JP-A- 2018 149 570
- JP-A- 2019 107 698

## Description

### TECHNICAL FIELD

The present invention relates to a system for manufacturing an additively-manufactured object built by depositing weld beads based on a depositing plan, a method for manufacturing an additively-manufactured object, and a program for manufacturing an additively-manufactured object.

### BACKGROUND ART

Patent Literature 1 discloses a welding quality determination method capable of determining welding quality of a welded product welded by 1ap welding, which is non-penetration welding. This method is a welding quality determination method for determining welding quality of a welded product obtained by joining a first material to be welded and a second material to be welded by irradiating the first material to be welded with a laser beam while the first material to be welded and the second material to be welded are superimposed on each other, in which: a welded portion in which the first material to be welded and the second material to be welded are laser-welded by irradiation of a laser beam is a portion solidified after the first material to be welded and the second material to be welded are molten; the welded portion is formed by welding in which a molten region of the second material to be welded does not reach a surface of the second material to be welded that is opposite to the first material to be welded during the laser welding; and the welding quality of the welded product is determined based on a height of a weld bead formed on a laser beam irradiated surface of the first material to be welded in the welded portion.

Patent Literature 2 discloses a system and a method for providing positional feedback for additive manufacturing. One or two of an output current, an output voltage, an output power, an output circuit impedance, and a wire feed speed are sampled during an additive manufacturing process in producing a current layer. A plurality of instantaneous contact tip-to-work distances (CTWD) are determined based on at least one or two of the output current, output voltage, output power, output circuit impedance, and wire feed speed. An average CTWD is determined based on the plurality of instantaneous CTWDs. A correction factor that is used to compensate for any error in the current layer height is generated based at least on the average CTWD. Patent Literature 3 describes a method, a system, and a program for manufacturing a laminate-molded object.

### CITATION LIST

### PATENT LITERATURE

Patent Literature 1: JP2018-79502A
Patent Literature 2: JP2019-107698A
Patent Literature 3: EP 3 597 342 A1

### SUMMARY OF INVENTION

### TECHNICAL PROBLEM

Width and height of each weld bead must be controlled in order to create an additively-manufactured object with high precision. A feedback control method regarding a shape of the weld bead using laser sensor information or current and voltage information is proposed. Patent Literature 1 measures a bead height by a laser sensor to perform feedback control. Patent Literature 2 monitors an output current, a wire feed speed, and the like to perform feedback control of a distance between a tip and a work (height information).

However, depending on different additively-manufactured objects, there is a possibility that a bead cannot be measured by the laser sensor, and it is difficult to perform feedback control by the laser sensor in that range.

The present invention relates to a technique for obtaining an appropriate bead shape of a weld bead when manufacturing an additively-manufactured object obtained by depositing a plurality of weld beads formed by melting and solidifying a filler metal using an arc on a base material.

### SOLUTION TO PROBLEM

Present invention is a system for manufacturing an additively-manufactured object obtained by depositing weld beads based on a depositing plan as defined in the appended claim 1, the system including: a torch that is provided on a robot arm; a first measurement unit that is mounted on the torch and that directly measures, in a non-contact manner, a base shape of a base portion on which the weld beads are deposited; a second measurement unit that measures at least one of a current, a voltage, and a filler metal supply rate when the weld beads are deposited, and indirectly measures the base shape from a change in numerical values of at least one of the current, the voltage, and the filler metal supply rate measured during the deposition of the weld beads; and a control unit that selects at least either of a measurement result by the first measurement unit or by the second measurement unit and corrects control of at least one of the robot arm, the current, the voltage, and the filler metal supply rate.

The control unit compares the measurement result by the first measurement unit and the measurement result by the second measurement unit with predetermined threshold values, respectively, and correct the control by switching selection of the measurement result when a deviation value from the threshold value exceeds a predetermined value.

The control unit may compare a moving distance of the torch, a measurement position of the first measurement unit, and a measurement position of the second measurement unit with positions on the depositing plan to switch the selection of the measurement result.

The first measurement unit may be a laser sensor, and a laser beam of the laser sensor may be emitted forward or backward with respect to a scanning direction of the torch.

A value obtained by averaging the measurement result over a predetermined period of time may be compared with the threshold value.

The measurement result by the second measurement unit may be selected when a mounting direction of the laser sensor as seen from the torch is not same as the scanning direction of the torch.

Further, the present invention is a method for manufacturing an additively-manufactured object obtained by depositing weld beads based on a depositing plan as defined in the appended claim 5, the method including: a step of using a first measurement unit that is mounted on a torch supported by a robot arm to directly measure, in a non-contact manner, a base shape of a base portion on which the weld beads are deposited; a step of using a second measurement unit to measure at least one of a current, a voltage, and a filler metal supply rate when the weld beads are deposited, and indirectly measure the base shape from a change in numerical values of at least one of the current, the voltage, and the filler metal supply rate measured during the deposition of the weld beads; and a step of selecting at least either of a measurement result by either the first measurement unit or the second measurement unit and correcting control of at least one of the robot arm, the current, the voltage, and the filler metal supply rate.

Further, the present invention is a program that causes a computer to execute a procedure of a method for manufacturing an additively-manufactured object obtained by depositing weld beads based on a depositing plan for executing the method for manufacturing an additively-manufactured object as defined in the appended claim 6, the program causing the computer to execute: a step of using a first measurement unit that is mounted on a torch provided on a robot arm to directly measure, in a non-contact manner, a base shape of a base portion on which the weld beads are deposited; a step of using a second measurement unit to measure at least one of a current, a voltage, and a filler metal supply rate when the weld beads are deposited, and indirectly measure the base shape from a change in numerical values of at least one of the current, the voltage, and the filler metal supply rate measured during the deposition of the weld beads; and a step of selecting at least either of a measurement result by the first measurement unit or by the second measurement unit and correcting control of at least one of the robot arm, the current, the voltage, and the filler metal supply rate.

### ADVANTAGEOUS EFFECTS OF INVENTION

According to the present invention, an appropriate result can be selected among measurement results of a shape of a base portion measured by a first measurement unit or a second measurement unit, and an additively-manufactured object can be manufactured with high precision.

### BRIEF DESCRIPTION OF DRAWINGS

Fig. 1 is a schematic configuration diagram of a manufacturing system for manufacturing an additively-manufactured object by a manufacturing method according to an embodiment of the present invention;
Fig. 2 is a schematic side view showing a shape sensor;
Fig. 3 is a schematic cross-sectional view of an additively-manufactured object showing an example of the additively-manufactured object;
Fig. 4 is a conceptual diagram showing a state when a weld bead is formed by a torch and a laser sensor, in which (A) shows a state in which a weld bead is formed when a laser beam of the laser sensor is not blocked by a frame portion of the additively-manufactured object, and (B) shows a state in which a weld bead is formed when the laser beam is blocked by the frame portion of the additively-manufactured object;
Fig. 5 is a conceptual diagram showing a state of switching between a first measurement unit and a second measurement unit when forming a weld bead using the torch and the laser sensor;
Fig. 6 is a graph of measurement information used for switching between the first measurement unit and the second measurement unit, in which (A) is a graph of a height of a weld bead measured by the first measurement unit, and (B) is a graph of values of current, voltage, or filler metal supply rate when depositing weld beads measured by the second measurement unit;
Fig. 7 shows an example of rearward irradiation by a shape sensor constituting the first measurement unit; and
Fig. 8 is a conceptual diagram showing a relation between a mounting direction of the laser sensor and a scanning direction of the torch, in which (A) shows a case in which the mounting direction of the laser sensor is the same as the scanning direction of the torch as seen from the torch, and (B) shows a case in which the mounting direction of the laser sensor is not the same as the scanning direction of the torch as viewed from the torch.

### DESCRIPTION OF EMBODIMENTS

Hereinafter, an embodiment of the present invention will be described in detail with reference to the drawings.

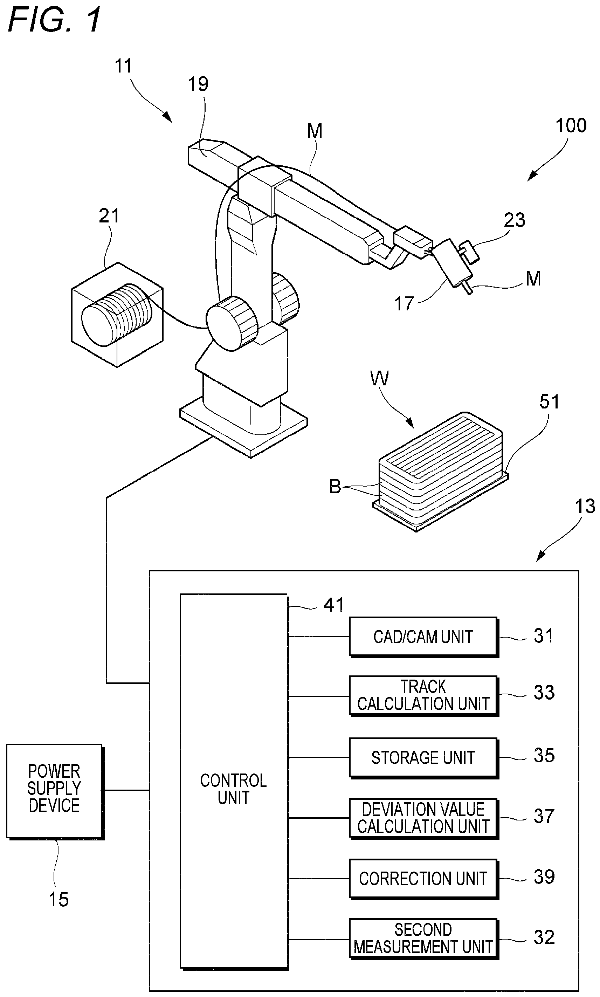

Fig. 1 is a configuration diagram of a manufacturing system used for manufacturing an additively-manufactured object according to the present invention. A manufacturing system 100 of an additively-manufactured object having the present configuration includes an additive manufacturing device 11, a controller 13 that integrally controls the additive manufacturing device 11, and a power supply device 15.

The additive manufacturing device 11 includes a welding robot 19 including a tip shaft provided with a torch 17, and a filler metal supply unit 21 that supplies a filler metal (welding wire) M to the torch 17. The tip shaft of the welding robot 19 is provided with a shape sensor 23 constituting a first measurement unit, together with the torch 17.

The welding robot 19 is a multi-joint robot, and the filler metal M is supported by the torch 17 mounted on a tip shaft of a robot arm in a continuously suppliable manner. A position and a posture of the torch 17 can be freely set three-dimensionally within a range of a degree of freedom of the robot arm.

The torch 17 includes a shield nozzle (not shown), and the shield nozzle supplies shielding gas. An arc welding method may be either a consumable electrode type such as shielded metal arc welding or carbon dioxide gas arc welding, or a non-consumable electrode type such as TIG welding or plasma arc welding, and is appropriately selected according to an additively-manufactured object to be manufactured.

For example, in the case of the consumable electrode type, a contact tip is disposed inside the shield nozzle, and the filler metal M to which a melting current is supplied is held on the contact tip. The torch 17 generates an arc from a tip of the filler metal M in a shielding gas atmosphere while holding the filler metal M. The filler metal M is fed from the filler metal supply unit 21 to the torch 17 by a feeding mechanism (not shown) mounted on the robot arm or the like. Then, when the continuously supplied filler metal M is melted and solidified while the torch 17 moves, a linear weld bead B, which is a melted and solidified body of the filler metal M, is formed on a base plate 51, and an additively-manufactured object W formed of the weld bead B is manufactured.

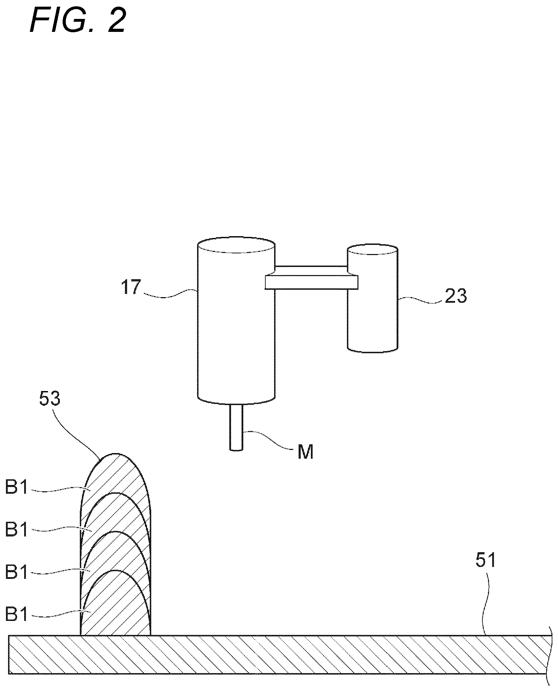

As shown in Fig. 2, the shape sensor 23 is arranged in parallel with the torch 17, and is moved together with the torch 17. The shape sensor 23 is a sensor that measures a shape of a portion serving as a base during formation of the weld bead B. As the shape sensor 23, for example, a laser sensor that acquires reflected light of the emitted laser beam as height data is used. Note that as the shape sensor 23, a three-dimensional shape measuring camera may be used.

The controller 13 includes a CAD/CAM unit 31, a track calculation unit 33, a storage unit 35, a deviation amount calculation unit 37, a correction unit 39, a second measurement unit 32, and a control unit 41 to which these units are connected. The controller 13 is implemented by a computer device including a CPU, a memory, a storage, and the like.

The CAD/CAM unit 31 inputs or creates shape data (CAD data and the like) of the additively-manufactured object W to be manufactured.

The track calculation unit 33 disassembles a shape model of three-dimensional shape data into a plurality of weld bead layers according to a height of the weld bead B. Then, for each layer of the disassembled shape model, a depositing plan is created, which defines a track of the torch 17 for forming the weld bead B and heating conditions for forming the weld bead B (including welding conditions for obtaining a bead width, a bead depositing height, and the like).

The deviation amount calculation unit 37 compares the depositing plan generated by the track calculation unit 33 with a measured value obtained by the shape sensor 23. Then, a deviation amount between a shape based on the depositing plan and a shape based on the measured value in the portion serving as the base during formation of the weld bead B is calculated.

The correction unit 39 corrects, based on the deviation amount calculated by the deviation amount calculation unit 37, the welding conditions based on the depositing plan during formation of the weld bead B.

The second measurement unit 32 acquires a current and a voltage during formation of the weld bead B from the power supply device 15, and acquires a filler metal supply rate, which is a rate at which the filler metal (welding wire) M is supplied to the torch 17, from the filler metal supply unit 21. Therefore, the second measurement unit 32 can estimate and measure a shape of a base portion (a base shape) that serves as the base during formation of the weld bead B from history change in these values. The shape sensor 23 constituting the first measurement unit directly measures the base shape in a non-contact manner using a medium such as a laser beam, whereas the second measurement unit 32 indirectly measures the base shape from numerical values such as the current, voltage, and filler metal supply rate during formation of the weld bead B.

The control unit 41 executes a manufacturing program stored in the storage unit 35 to drive the welding robot 19, the power supply device 15, and the like. That is, the welding robot 19 moves the torch 17 in response to a command from the controller 13 and melts the filler metal M with an arc to form the weld bead B on the base plate 51.

Note that the base plate 51 is made of a metal plate such as a steel plate, and is basically larger than a bottom surface (a surface of a lowermost layer) of the additively-manufactured object W. The base plate 51 is not limited to a plate shape, and may be a base of other shapes such as a block body or a rod body.

Any commercially available welding wire can be used as the filler metal M. For example, a wire specified by solid wires for MAG welding and MIG welding of mild steel, high strength steel, and low temperature service steel (JISZ 3312), flux-cored wires for arc welding of mild steel, high strength steel, and low temperature service steel (JISZ 3313), or the like can be used.

Next, an example of an additively-manufactured object manufactured by a manufacturing method according to the present embodiment will be described.

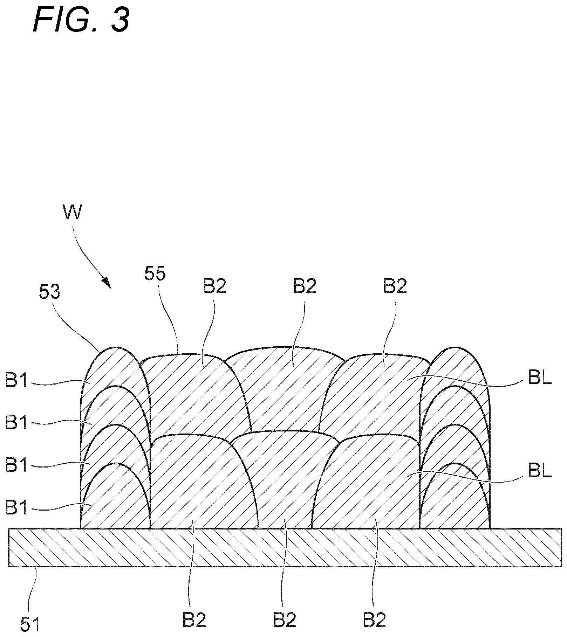

Fig. 3 is a schematic cross-sectional view of the additively-manufactured object W showing an example of the additively-manufactured object W.

As shown in Fig. 3, the additively-manufactured object W includes a frame portion 53 built by depositing weld beads B1 on the base plate 51. Furthermore, the additively-manufactured object W includes an internal molded portion 55 built based on weld beads B2 inside the frame portion 53. The internal molded portion 55 is formed by depositing weld bead layers BL constituted by the weld beads B2.

Next, a case of building the additively-manufactured object W will be described.

The filler metal M is melted while the torch 17 of the additive manufacturing device 11 is moved by being driven by the welding robot 19. Then, the weld beads B1 made of the melted filler metal M are supplied and deposited on the base plate 51 to build the frame portion 53 having a substantially rectangular shape in a plan view, which is formed by the weld beads B1 deposited on the base plate 51.

The weld beads B2 are formed inside the frame portion 53. The weld beads B2 are formed in a width direction in the frame portion 53. Accordingly, the weld bead layers BL constituted by the plurality of weld beads B2 formed in parallel are formed in the frame portion 53. Then, the weld bead layers BL are deposited inside the frame portion 53, so that the internal molded portion 55 is built.

According to this manufacturing method, since the internal molded portion 55 is built inside the frame portion 53 after the frame portion 53 is built, the internal molded portion 55 can be efficiently built by the weld beads B2 having a large cross-sectional area.

Width and height of each weld bead must be controlled in order to create the additively-manufactured object W with high precision using the manufacturing system 100 for additively-manufactured objects, and it is desirable to perform feedback control regarding a shape of the weld bead using laser sensor information or current and voltage information. For example, a bead height is measured by the laser sensor to perform the feedback control.

However, depending on a shape of the additively-manufactured object, there is a possibility that a bead cannot be measured by the laser sensor, and it is difficult to perform feedback control by the laser sensor in that range.

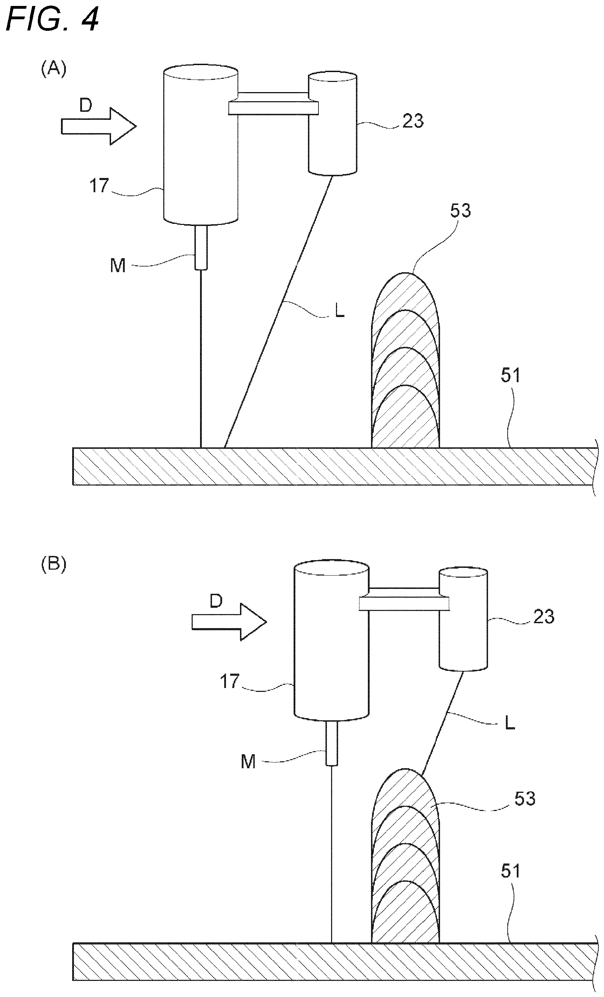

Fig. 4 shows a state in which the torch 17 advances in an advancing direction D toward the frame portion 53 constituting a wall portion erected from the base plate 51, when the weld beads B2 are formed on the base plate 51 serving as the base. As shown in (A) of Fig. 4, until the torch 17 approaches a position separated from the frame portion 53 by a predetermined distance, a laser beam L emitted from the shape sensor 23, which is a laser sensor mounted on the torch 17, reaches the base plate 51. Therefore, the shape sensor 23 constituting the first measurement unit can estimate a shape of a surface of the base plate 51 (the base shape) in a non-contact manner, that is, can estimate height information zₐ of the base plate 51, and can obtain a distance estimate dₑ from the torch 17 to the base plate 51.

Even in this state, it is possible to measure values such as the current, voltage or filler metal supply rate during deposition of the weld beads. Therefore, the second measurement unit 32 can estimate the bead shape of the weld bead from history change of these values, and can obtain the distance estimate dₑ from the torch 17 to the base plate 51.

In the state of (A) in Fig. 4, both the distance estimate dₑ obtained from the shape sensor 23, which is the first measurement unit and the distance estimate dₑ obtained from the second measurement unit 32 can be used. Adjustment to depositing height can be made by modifying the welding conditions based on change in the distance estimate dₑ. For example, when the height information zₐ is too high or the distance estimate dₑ is too short, in order to reduce the depositing height, operation such as correcting the control of the robot arm, increasing the welding rate, decreasing the filler metal supply rate, decreasing the current or the voltage, or both the current and the voltage, are performed.

On the other hand, (B) of Fig. 4 shows a state in which the torch 17 approaches a position within a predetermined distance from the frame portion 53. In this state, the irradiation of the laser beam L from the shape sensor 23 is blocked by the frame portion 53 functioning as a wall and does not reach the base plate 51. Therefore, the shape sensor 23 cannot obtain the height information zₐ of the base plate 51 and the distance estimate dₑ to the base plate 51, cannot recognize the base shape, and also cannot perform the adjustment to the height described above.

Positions where the measurement by the shape sensor 23 is obstructed as shown in (B) of Fig. 4 can be recognized from the depositing plan (path information, track plan), a laser line of the laser beam, and a distance to the base plate 51 directly below the torch 17. Therefore, by switching the information for monitoring the height based on the position to the distance estimate dₑ obtained from the second measurement unit 32, the depositing height can be monitored and controlled even with the frame portion 53 present. That is, the control unit 41 selects either of the measurement result by the first measurement unit or the second measurement unit, and corrects at least one control among the control of the robot arm of the welding robot 19, the control of the welding rate, the control of the filler metal supply rate, the control of the current and voltage, and the like.

Note that in the above description, an example of recognizing the distance from the first measurement unit or the second measurement unit to the base plate 51 is described. In this example, the surface shape of the base plate 51 is the base shape. On the other hand, for example, when the weld beads B2 are built on the base plate 51, the first measurement unit or the second measurement unit recognizes the distance to the weld beads B2. That is, the surface shape of the weld beads B2 becomes the base shape. Although the base on which the weld beads are formed is made of various members depending on different situations, the present embodiment can be applied to any member. The same applies to the following description.

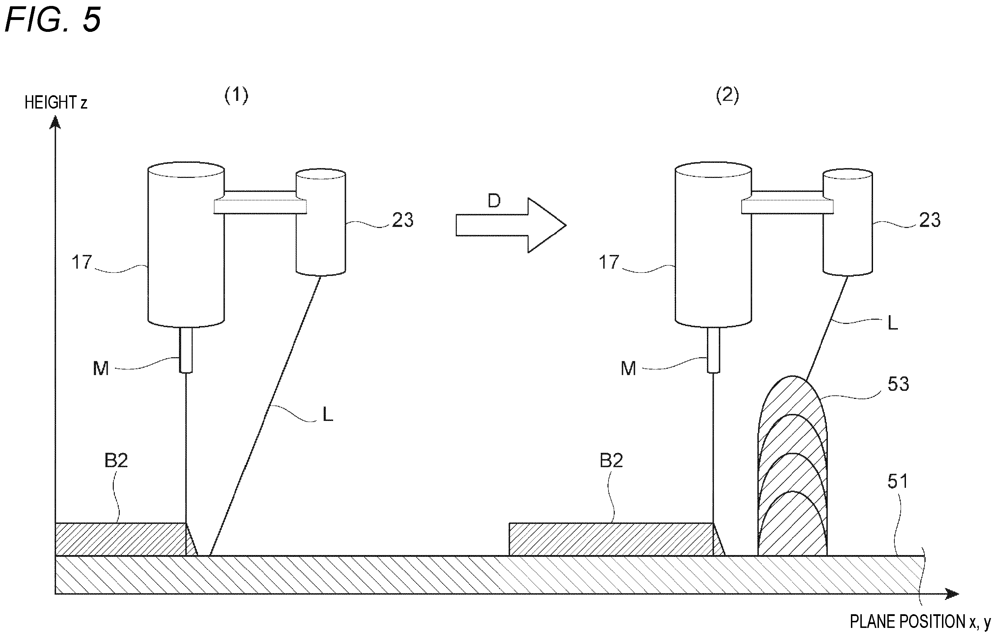

Fig. 5 shows a situation in which the control unit 41 selects the measurement result. The control unit 41 compares a moving distance of the torch 17, a measurement position of the shape sensor 23, which is the first measurement unit, and a measurement position of the second measurement unit 32 with positions on the depositing plan (coordinates x, y on the plane and a height coordinate z), and then switches the selection of the measurement result. The control unit 41 determines that a position (1) is the measurement position of the shape sensor 23 and determines that a position (2) is the measurement position of the second measurement unit 32.

According to the present embodiment, at a measurement location where there is an obstacle for the laser beam L such as the frame portion 53, information of the second measurement unit 32 such as the current, voltage, or filler metal supply rate during deposition of the weld bead is monitored to acquire and compensate for the information of the base shape. On the other hand, when the current, voltage, or filler metal supply rate is temporarily disturbed due to surface unevenness, surface slag, disturbance, or the like, the height information can be obtained by the non-contact measurement from the shape sensor 23, which is the first measurement unit. As a result, it is possible to acquire appropriate information on the base portion on which the weld bead is to be built, and to manufacture an additively-manufactured object with high precision.

The control unit 41 can accurately recognize the position at which the switching between the first measurement unit and the second measurement unit is performed even before manufacturing by comparing the moving distance of the torch 17, the measurement position of the shape sensor 23, which is the first measurement unit, and the measurement position of the second measurement unit with the positions on the depositing plan.

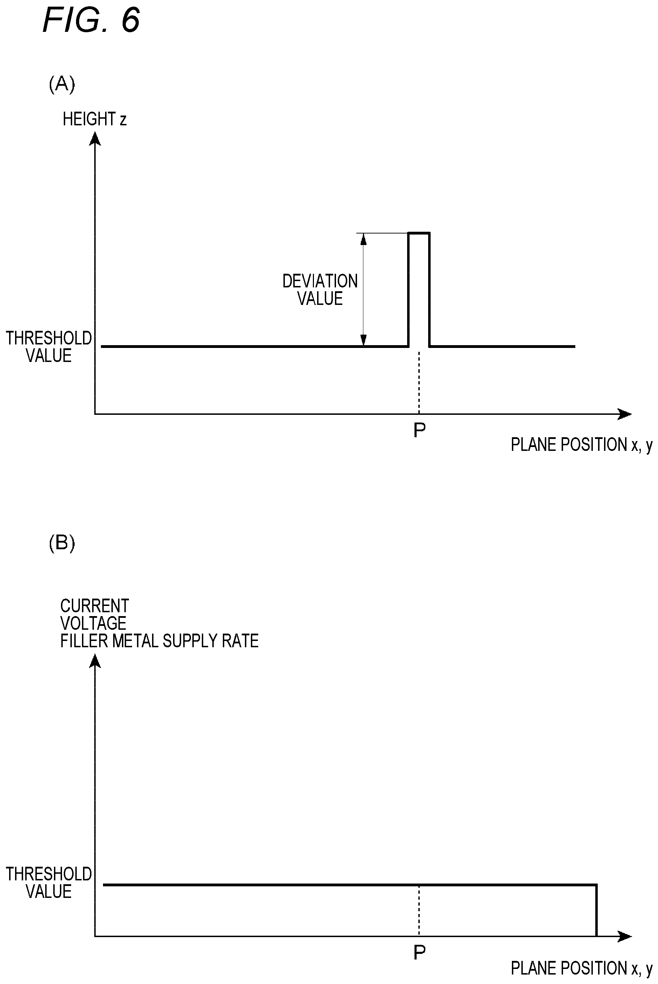

Note that even without using the depositing plan, the control unit 41 can compare the measurement result by the first measurement unit and the measurement result by the second measurement unit with predetermined threshold values, respectively, and can correct the various controls described above, such as the control to the robot arm, by switching the selection of the measurement result when a deviation value from the threshold value exceeds a predetermined value. Fig. 6 is a graph showing changes in the measurement results, in which

(A) of Fig. 6 is the measurement result by the shape sensor 23, which is the first measurement unit, and is the height information obtained from reflection intensity of the emitted laser beam

L, and (B) of Fig. 6 is the measurement result by the second measurement unit 32, and is the value of the current, the voltage, or the filler metal supply rate during deposition of the weld beads. In (A) of Fig. 6, only at a position P, the deviation value of the obtained height from the threshold value exceeds a predetermined value. On the other hand, at the same position P, as shown in (B) of Fig. 6, values such as the current, the voltage, and the filler metal supply rate during deposition of the weld beads do not change dramatically. Therefore, even if the control unit 41 does not refer to the depositing plan, the laser beam L from the shape sensor 23, which is the first measurement unit, does not reach the base portion at the position P, and it can be presumed that the laser beam L is reflected by an object such as the frame portion 53. In this case, the control unit 41 determines that the position P is the measurement position of the second measurement unit 32 and selects the measurement result by the second measurement unit 32.

According to the present embodiment, since the first measurement unit and the second measurement unit acquire abnormal values for different reasons, it is possible to switch to the other one if a determination is made using a threshold value and there is an abnormality. The threshold value in this switching judgment may be adjusted in consideration of accuracy or robustness of each measurement unit.

The control unit 41 may perform the above-described comparison with the threshold value based on a value obtained by averaging the measurement results of the first measurement unit and the second measurement unit over a predetermined period of time. The averaging can reduce effects from noise, outliers, and the like, so that a stable measurement result can be obtained.

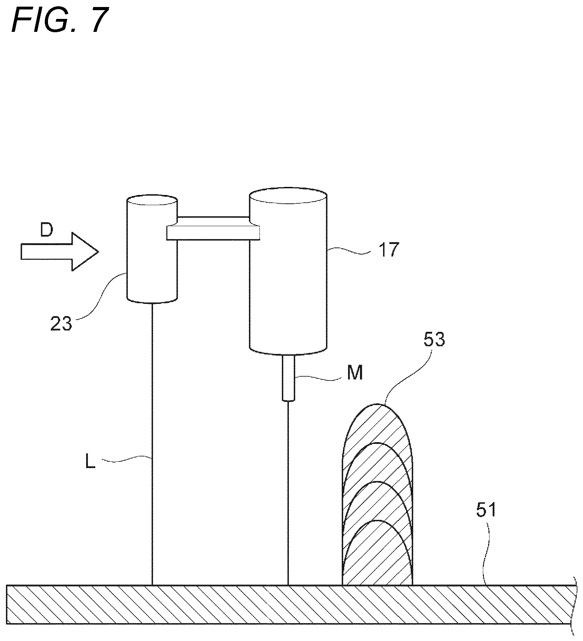

An example of the first measurement unit is the shape sensor 23, and the laser beam L of the shape sensor 23 is emitted forward or backward with respect to a scanning direction (advancing direction) of the torch 17. Figs. 4 and 5 show examples of forward irradiation. On the other hand, when the shape sensor 23 is mounted on the opposite side of the torch 17 in these drawings, the irradiation is rearward as shown in Fig. 7.

The shape sensor 23 can measure the shape of the weld bead B with high precision. In the case of forward irradiation, unevenness on the surface of the weld bead B serving as the base can be monitored, and in the case of rearward irradiation, the height of the weld bead B immediately after deposition can be confirmed. Note that in monitoring the current, voltage, and filler metal supply rate, the height directly below the torch 17 is recognized.

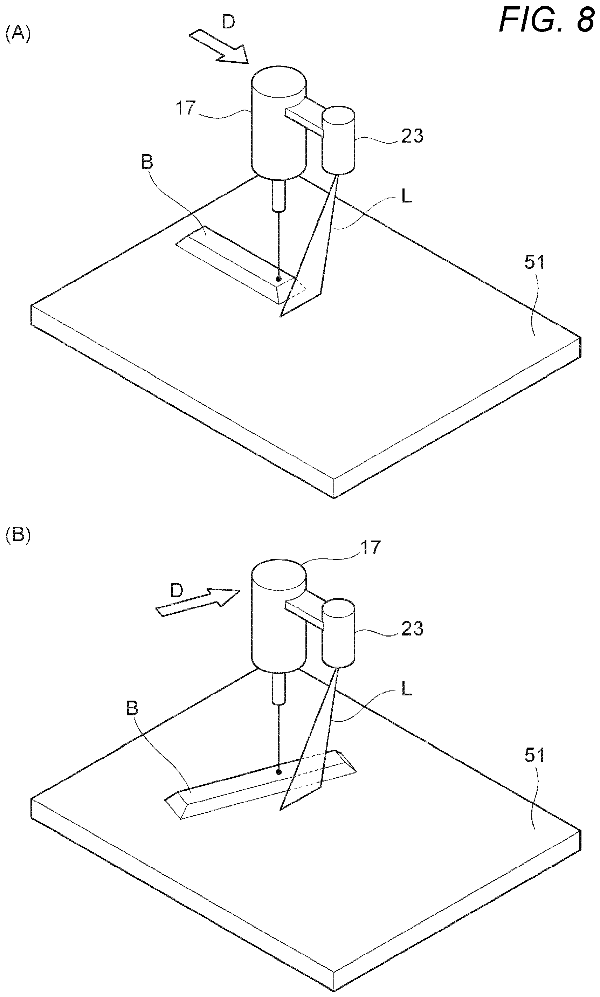

Note that when the shape sensor 23 is fixed to the torch 17, the shape sensor 23 cannot always measure a shape of a depositing path on the track. For example, when an extending direction of the laser beam L and the scanning direction of the torch 17 are orthogonal to each other as shown in (A) of Fig. 8, the height of the base portion in the track of the depositing path can be measured. On the other hand, when the extending direction of the laser beam L and the scanning direction of the torch 17 are not perpendicular to each other as shown in (B) of Fig. 8, the height of the base portion in the track of the depositing path cannot be sufficiently measured. Since the shape sensor 23 is fixed to the torch 17 and cannot move around the torch 17, the base portion on which the weld bead is to be built cannot be irradiated with the laser beam L. Therefore, in such a case, it is desirable to monitor the height using a value such as the current, voltage, or filler metal supply rate during deposition of the weld bead obtained by the second measurement unit 32.

That is, when the mounting direction of the shape sensor 23 as seen from the torch 17 and the scanning direction of the torch 17 are the same as in the case of (A) in Fig. 8, the control unit 41 can use either the measurement result by the shape sensor 23, which is the first measurement unit, or the measurement result by the second measurement unit 32. On the other hand, when the mounting direction of the shape sensor 23 as seen from the torch 17 and the scanning direction of the torch 17 are not the same as in the case of (B) in Fig. 8, it is desirable that the control unit 41 selects the measurement result by the second measurement unit 32. Since such a situation can be recognized in advance from the depositing plan, the control unit 41 can set switching between the first measurement unit and the second measurement unit in advance based on the depositing plan.

In the case of (B) in Fig. 8, since it is practically impossible for the shape sensor 23 to measure the height of the base portion on which the weld bead B is to be formed, this information can be compensated by the current, voltage, and filler metal supply rate measured by the second measurement unit 32.

In the present embodiment, the frame portion 53 is exemplified as an object that blocks the laser beam from the shape sensor 23, but the object that blocks the laser beam is not limited to the frame portion 53. When the shape sensor 23 cannot measure the base shape due to an object blocking the laser beam, the control unit 41 can use the measurement result by the second measurement unit 32.

The present invention as set out in the appended set of claims is not limited to the above embodiment. Materials, shapes, sizes, numerical values, forms, numbers, arrangement positions, and the like of components in the above embodiment are set as desired and not limited as long as the present invention as set out in the appended set of claims can be achieved.

### REFERENCE SIGNS LIST

17: torch
23: shape sensor (first measurement unit)
32: second measurement unit
41: control unit
53: frame portion
55: internal molded portion
B, B1, B2: weld bead
BL: weld bead layer
M: filler metal
W: additively-manufactured object

## Claims

1. A system (100) for manufacturing an additively-manufactured object (W) obtained by depositing weld beads (B, B1, B2) based on a depositing plan, the system (100) comprising:
a torch (17) that is provided on a robot arm; and
a first measurement unit (23) that directly measures, in a non-contact manner, a base shape of a base portion on which the weld beads (B, B1, B2) are deposited,
a control unit (41) that selects at least either of a measurement result by the first measurement unit (23) or by the second measurement unit (32) and corrects control of at least one of the robot arm, the current, the voltage, and the filler metal (M) supply rate;
**characterized in that** the system (100) further includes:
a second measurement unit (32) that measures at least one of a current, a voltage, and a filler metal (M) supply rate when the weld beads (B, B1, B2) are deposited, and indirectly measures the base shape from a change in numerical values of at least one of the current, the voltage, and the filler metal (M) supply rate measured during the deposition of the weld beads (B, B1, B2); and
wherein the first measurement unit (23) is mounted on the torch (17);
wherein the control unit (41) compares the measurement result by the first measurement unit (23) and the measurement result by the second measurement unit (32) with predetermined threshold values, respectively, and corrects the control by switching selection of the measurement result when a deviation value from the threshold value exceeds a predetermined value.

2. The system (100) for manufacturing an additively-manufactured object (W) according to claim 1, wherein
the first measurement unit (23) is a laser sensor, and
a laser beam of the laser sensor is emitted forward or backward with respect to a scanning direction of the torch (17).

3. The system (100) for manufacturing an additively-manufactured object (W) according to claim 1, wherein
the control unit (41) compares the measurement result by the first measurement unit (23) and the measurement result by the second measurement unit (32) with the threshold value based on a value obtained by averaging the measurement result over a predetermined period of time.

4. The system (100) for manufacturing an additively-manufactured object (W) according to claim 2, wherein
the measurement result by the second measurement unit (32) is selected when a mounting direction of the laser sensor as seen from the torch (17) is not same as the scanning direction of the torch (17).

5. A method for manufacturing an additively-manufactured object (W) obtained by depositing weld beads (B, B1, B2) based on a depositing plan, the method comprising:
a step of using a first measurement unit (23) supported by a robot arm to directly measure, in a non-contact manner, a base shape of a base portion on which the weld beads (B, B1, B2) are deposited, **characterized in that** the method further comprises:
a step of using a second measurement unit (32) to measure at least one of a current, a voltage, and a filler metal (M) supply rate when the weld beads (B, B1, B2) are deposited, and indirectly measure the base shape from a change in numerical values of at least one of the current, the voltage, and the filler metal (M) supply rate measured during the deposition of the weld beads (B, B1, B2); and
a step of selecting at least either of a measurement result by either the first measurement unit (23) or the second measurement unit (32) and correcting control of at least one of the robot arm, the current, the voltage, and the filler metal (M) supply rate;
wherein the first measurement unit (23) is mounted on a torch (17);
a step of comparing the measurement result by the first measurement unit (23) and the measurement result by the second measurement unit (32) with predetermined threshold values, respectively;
a step of correcting the control by switching selection of the measurement result when a deviation value from the threshold value exceeds a predetermined value.

6. A program comprising instructions to cause the system of claim 1 to execute the step of the method of claim 5.

## Patentansprüche

1. System (100) zur Herstellung eines additiv gefertigten Objekts (W), erhalten durch Abscheiden von Schweißraupen (B, B1, B2), basierend auf einem Abscheideplan, wobei das System (100) umfasst:
einen Brenner (17), der an einem Roboterarm bereitgestellt ist; und
eine erste Messeinheit (23), die kontaktlos direkt eine Grundform eines Grundabschnitts misst, auf welchem die Schweißraupen (B, B1, B2) abgeschieden werden,
eine Steuereinheit (41), die mindestens entweder ein Messergebnis durch die erste Messeinheit (23) oder durch die zweite Messeinheit (32) auswählt und eine Steuerung mindestens eines von dem Roboterarm, dem Strom, der Spannung und der Füllmetall (M) Zufuhrrate korrigiert;
**dadurch gekennzeichnet, dass** das System (100) weiter einschließt:
eine zweite Messeinheit (32), die mindestens eines von einem Strom, einer Spannung und einer Füllmetall (M) Zufuhrrate misst, wenn die Schweißraupen (B, B1, B2) abgeschieden werden, und die Grundform indirekt aus einer Änderung von Zahlenwerten mindestens eines von dem Strom, der Spannung und der Füllmetall (M) Zufuhrrate, gemessen während der Abscheidung der Schweißraupen (B, B1, B2), misst; und
wobei die erste Messeinheit (23) an dem Brenner (17) befestigt ist;
wobei die Steuereinheit (41) das Messergebnis der ersten Messeinheit (23) und das Messergebnis der zweiten Messeinheit (32) jeweils mit vorbestimmten Schwellenwerten vergleicht und die Steuerung korrigiert, indem eine Auswahl des Messergebnisses umgeschaltet wird, wenn ein Abweichungswert von dem Schwellenwert einen vorbestimmten Wert überschreitet.

2. System (100) zur Herstellung eines additiv gefertigten Objekts (W) nach Anspruch 1, wobei
die erste Messeinheit (23) ein Lasersensor ist, und
ein Laserstrahl des Lasersensors vorwärts oder rückwärts in Bezug auf eine Scanrichtung des Brenners (17) ausgesendet wird.

3. System (100) zur Herstellung eines additiv gefertigten Objekts (W) nach Anspruch 1, wobei
die Steuereinheit (41) das Messergebnis durch die erste Messeinheit (23) und das Messergebnis durch die zweite Messeinheit (32) mit dem Schwellenwert, basierend auf einem Wert, erhalten durch Mitteln des Messergebnisses über einen vorbestimmten Zeitraum, vergleicht.

4. System (100) zur Herstellung eines additiv gefertigten Objekts (W) nach Anspruch 2, wobei
das Messergebnis durch die zweite Messeinheit (32) ausgewählt wird, wenn eine Befestigungsrichtung des Lasersensors, gesehen von dem Brenner (17), nicht dieselbe ist wie die Scanrichtung des Brenners (17).

5. Verfahren zur Herstellung eines additiv gefertigten Objekts (W), erhalten durch Abscheiden von Schweißraupen (B, B1, B2), basierend auf einem Abscheideplan, wobei das Verfahren umfasst:
einen Schritt des Verwendens einer ersten Messeinheit (23), gestützt durch einen Roboterarm, um kontaktlos direkt eine Grundform eines Grundabschnitts zu messen, auf welchem die Schweißraupen (B, B1, B2) abgeschieden werden, **dadurch gekennzeichnet, dass** das Verfahren weiter umfasst:
einen Schritt des Verwendens einer zweiten Messeinheit (32), um mindestens eines von einem Strom, einer Spannung und einer Füllmetall (M) Zufuhrrate zu messen, wenn die Schweißraupen (B, B1, B2) abgeschieden werden, und die Grundform indirekt aus einer Änderung von Zahlenwerten mindestens eines von dem Strom, der Spannung und der Füllmetall (M) Zufuhrrate, gemessen während der Abscheidung der Schweißraupen (B, B1, B2), zu messen; und
einen Schritt des Auswählens mindestens eines Messergebnisses durch entweder die erste Messeinheit (23) oder die zweite Messeinheit (32) und des Korrigierens einer Steuerung mindesten eines von dem Roboterarm, dem Strom, der Spannung und der Füllmetall (M) Zufuhrrate; wobei die erste Messeinheit (23) an dem Brenner (17) befestigt ist;
einen Schritt des Vergleichens des Messergebnisses durch die erste Messeinheit (23) und des Messergebnisses durch die zweite Messeinheit (32) jeweils mit vorbestimmten Schwellenwerten;
einen Schritt des Korrigierens der Steuerung durch Umschalten einer Auswahl des Messergebnisses, wenn ein Abweichungswert von dem Schwellenwert einen vorbestimmten Wert überschreitet.

6. Programm, das Anweisungen umfasst, um das System nach Anspruch 1 zu veranlassen, die Schritte des Verfahrens nach Anspruch 5 auszuführen.

## Revendications

1. Système (100) de fabrication d'un objet fabriqué de manière additive (W) obtenu en déposant des cordons de soudure (B, B1, B2) en fonction d'un plan de dépôt, le système (100) comprenant :
un chalumeau (17) qui est prévu sur un bras robotique ; et
un premier module de mesure (23) qui mesure directement sans contact une forme de base d'une portion de base sur laquelle les cordons de soudure (B, B1, B2) sont déposés,
un module de commande (41) qui sélectionne au moins l'un ou l'autre d'un résultat de mesure par le premier module de mesure (23) ou par le second module de mesure (32) et corrige la commande d'au moins un élément parmi le bras robotique, le courant, la tension et le taux d'alimentation en métal d'apport (M) ;
**caractérisé en ce que** le système (100) inclut en outre :
un second module de mesure (32) qui mesure au moins un élément parmi un courant, une tension et un taux d'alimentation en métal d'apport (M) lorsque les cordons de soudure (B, B1, B2) sont déposés, et mesure indirectement la forme de base à partir d'un changement de valeurs numériques d'au moins un élément parmi le courant, la tension et le taux d'alimentation en métal d'apport (M) mesuré au cours du dépôt des cordons de soudure (B, B1, B2) ; et
dans lequel le premier module de mesure (23) est monté sur le chalumeau (17) ;
dans lequel le module de commande (41) compare le résultat de mesure par le premier module de mesure (23) et le résultat de mesure par le second module de mesure (32) à des valeurs seuils prédéterminées, respectivement, et corrige la commande en commutant la sélection du résultat de mesure lorsqu'une valeur d'écart de la valeur seuil dépasse une valeur prédéterminée.

2. Système (100) de fabrication d'un objet fabriqué de manière additive (W) selon la revendication 1, dans lequel
le premier module de mesure (23) est un capteur laser, et
un faisceau laser du capteur laser est émis vers l'avant ou l'arrière par rapport à une direction de balayage du chalumeau (17).

3. Système (100) de fabrication d'un objet fabriqué de manière additive (W) selon la revendication 1, dans lequel
le module de commande (41) compare le résultat de mesure par le premier module de mesure (23) et le résultat de mesure par le second module de mesure (32) à la valeur seuil en fonction d'une valeur obtenue en moyennant le résultat de mesure sur une période de temps prédéterminée.

4. Système (100) de fabrication d'un objet fabriqué de manière additive (W) selon la revendication 2, dans lequel
le résultat de mesure par le second module de mesure (32) est sélectionné lorsqu'une direction de montage du capteur laser tel que vu depuis le chalumeau (17) n'est pas la même que la direction de balayage du chalumeau (17).

5. Procédé de fabrication d'un objet fabriqué de manière additive (W) obtenu en déposant des cordons de soudure (B, B1, B2) en fonction d'un plan de dépôt, le procédé comprenant :
une étape d'utilisation d'un premier module de mesure (23) supporté par un bras robotique pour mesurer directement sans contact une forme de base d'une portion de base sur laquelle les cordons de soudure (B, B1, B2) sont déposés, **caractérisé en ce que** le procédé comprend en outre :
une étape d'utilisation d'un second module de mesure (32) pour mesurer au moins un élément parmi un courant, une tension et un taux d'alimentation en métal d'apport (M) lorsque les cordons de soudure (B, B1, B2) sont déposés, et
mesurer indirectement la forme de base à partir d'un changement de valeurs numériques d'au moins un élément parmi le courant, la tension et le taux d'alimentation en métal d'apport (M) mesuré au cours du dépôt des cordons de soudure (B, B1, B2) ; et
une étape de sélection d'au moins l'un ou l'autre d'un résultat de mesure par le premier module de mesure (23) ou le second module de mesure (32) et de correction de la commande d'au moins un élément parmi le bras robotique, le courant, la tension et le taux d'alimentation en métal d'apport (M) ;
dans lequel le premier module de mesure (23) est monté sur un chalumeau (17) ;
une étape de comparaison du résultat de mesure par le premier module de mesure (23) et du résultat de mesure par le second module de mesure (32) à des valeurs seuils prédéterminées, respectivement ;
une étape de correction de la commande en commutant la sélection du résultat de mesure lorsqu'une valeur d'écart de la valeur seuil dépasse une valeur prédéterminée.

6. Programme comprenant des instructions pour amener le système selon la revendication 1 à exécuter l'étape du procédé selon la revendication 5.
